# EUROPEAN PATENT SPECIFICATION

(11) **EP 0 639 061 B1**
(45) Date of publication and mention of the grant of the patent: **07.05.1997**
(21) Application number: 93908524.7
(22) Date of filing: 24.03.1993
(51) Int. Cl.: A47L 9/14

(54) **A DUST BAG AND METHOD OF PRODUCTION**
STAUBBEUTEL UND PRODUKTIONSVERFAHREN
SAC A POUSSIERE ET PROCEDE DE PRODUCTION ASSOCIE

(30) Priority: 06.05.1992 DE 4214990
(43) Date of publication of application: 22.02.1995
(73) Proprietor: MINNESOTA MINING AND MANUFACTURING COMPANY, St. Paul, Minnesota 55133-3427 (US)
(72) Inventor: VAN ROSSEN, Leonard, M., NL-3981 BK Bunnik (NL)
(74) Representative: Hilleringmann, Jochen, Dipl.-Ing.
(86) International application number: US9302707
(87) International publication number: WO9321812

(56) References cited:
- EP-A- 0 161 790
- EP-A- 0 375 234
- FR-A- 1 167 874
- GB-A- 527 252
- US-A- 2 848 062
- US-A- 5 080 702

## Description

The invention relates to a dust bag, as well as to a method of producing a dust bag.

In recent years, the suction performance of vacuum cleaners has increased constantly. As a result, the air flow sucked into the dust bag through the inlet opening thereof is so strong that the particles taken along in the air flow to be cleaned may damage the dust bag when impinging on the inner surface thereof. This risk of damage to the bag of the vacuum cleaner is particularly high at the inner surface of the dust bag opposite the inlet opening. Further, such dust bags are particularly prone to damages, in which the inflowing air impinges obliquely onto the inner surface of the dust bag opposite the inlet opening; in such dust bags, the inner surface portion opposite the inlet opening is blown clean by the inflowing air so that no dust or particles can gather there which could protect the inner surface from damage.

From FR-A-1 167 874 a dust bag is known the wall of which consists of air-permeable portions as well as of impermeable portions. The impermeable portion prevents particles from penetrating into the wall of the dust bag when they hit it. Accordingly, the impermeable wall portion is arranged opposite to the inlet opening of the dust bag. The impermeable wall portion is connected with the air-permeable wall portion along its entire edge region.

From European Patent 0 161 760 A2, a dust bag is known having a filter bag consisting of a three-layered fiber material composite. An inner layer of polypropylene micro fiber is disposed between two outer supporting layers of high strength. The two outer layers consist of a nonwoven web of nylon fibers that are welded together. These outer layers are of a relatively high strength both in the machining direction and transversally thereto. However, since this known dust bag has two fiber layers of high strength, seen over its entire wall, it is comparatively expensive to produce.

It is an object of the present invention to provide a dust bag that is protected from damage by sucked particles and may be produced at low cost.

The object is solved by a dust bag comprising the features of claim 1. The subclaims relate to preferred embodiments of the invention.

The dust bag of the present invention has a filter bag provided with an air-permeable filter material and having two wall portions that are connected or closed at their respective opposite edges so as to form the filter bag. The inlet opening for allowing the inflow of the air to be cleaned into the filter bag is arranged in one of the two wall portions. On the inner surface of the wall portion opposite the inflow opening, a protective layer is provided that is made from an air-permeable material resistant to mechanical stresses caused by particles in the air flow and protecting the filter material of the filter bag. This protective layer extends at least over the surface portion of the other wall portion opposite the inlet opening and between at least two interconnected edges of the two wall portions, the protective layer being held between the interconnected edges over at least a part of their length. The protective layer may lie on the inner surface of the wall portion opposite the inlet opening.

The protective layer of the dust bag of the present invention is an insert positioned in the filter bag prior to the completion thereof. This insert is held on the filter bag by at least two interconnected end edges. Preferably, the insert is held at the filter bag at those of the insert's ends that are disposed between the interconnected edge portions of the wall portions of the filter bag. Each wall portion may be integral or may consist of a plurality of parts that are interconnected to constitute the respective wall portion. Advantageously, the protective layer of the present dust bag is in the form of a strip-shaped web that does not extend over the entire surface of the wall portion opposite the inlet opening, but is arranged only in the surface portion opposite the inlet opening and extends through the filter bag. The protective layer consists of air-permeable material. Preferably, the permeability to air of this material is considerably higher (for example, at least by the factor 10) than the permeability to air of the actual filter material so that the pressure drop of the dust bag is not or only insignificantly reduced.

Advantageously, the protective layer consists of a non-woven of rigidly connected (e.g. heat bonded) synthetic polymeric fibers and has a comparatively high strength, though being light of weight. Preferably, the strength of the protective layer is greater than that of the filter material by at least the factor 2 to 3.

In a first variant of a method for manufacturing of, the dust bag described above is made by forming a first web of air-permeable filter material. While being supplied, this first web of air-permeable filter material is shaped such that both longitudinal edges thereof are made to overlap. Together with the first web, a separate second web is supplied as a protective layer for the first web, the second web being narrower than the first one. The second web is about centered with respect to the first web. By shaping the first web, the same encloses the second web so that after connecting the overlapping longitudinal edges of the first web, a tube of filter material is obtained. In this tube, the second web is arranged as an insert, consisting of an air-permeable material resistant to mechanical stresses caused by particles in the air flow and protecting the filter material of the first web. The first web is provided with an opening which forms the (future) inlet opening which forms the (future) inlet opening of the finished dust bag for the inflow of air to be filtered into the filter bag. The inlet opening is provided opposite the second web. After the overlapping longitudinal edges have been connected, a section of the first web thus formed is severed with the second web disposed therein. The cut off section is then sealedly closed at both open end edges, which may be done, for example, by folding and heat bonding or glueing the ends. In doing so, both longitudinal ends of the second web are held at the two closed ends of the cut off section. The insert of the invention provided for the protection of the dust bag in the area opposite the inlet opening can thus readily be integrated into the production process as a second web supplied in addition to the first web. The second web is automatically fastened to the filter material web when closing the ends of the cut off hose section of filter material containing the second material web therein. There is no need for a large surface fastening of the second web to the first filter material web, since the inflowing air presses the second web onto the inner surface of the filter bag.

Whereas, according to the above method, dust bags of in particular paper filter material are generally produced, a second variant of a method for manufacturing a dust bag of the present invention preferably provides for the production of dust bags using a fiber layer composite as the filter material. Onto a first layer of such an air-permeable composite filter material, comprising one or more layers and synthetic, thermoplastic fibers, a second layer of a material is applied that is resistant to mechanical stresses caused by particles in the air flow to be filtered and is permeable to air. Onto this second layer, a third layer that is of the same material as the first layer is applied such that at least the edges of the first and the third layer overlap and at least two (opposing) edges of the second layer overlap opposing edges of the first and the third layer. The overlying layers are then welded together along the overlapping edges. Prior to welding and superposing the layers, an opening will be formed in the first or the third layer, the opening being opposite the second layer. By welding the described sequence of layers in order to produce the dust bag, the second layer is held between the two layers of filter material at its ends and/or its edge portions. Preferably, the second layer is narrower than the first or the third layer and extends through the dust bag only over the surface portion opposite the inlet opening.

In both methods of production, the inlet opening can also be provided in the filter bag after the same has been closed.

In its edge portions secured between the welded edges of the two filter material layers, the resistant second (intermediate) layer contributes to the strengthening of the weld seam. By welding the filter material layers together, the fibers in the area of the weld seam may become brittle due to the welding and may lose strength. The air-permeable second layer, the fibers of which preferably have a melting point higher than that of the filter material layers, strengthens the weld seam since it does not melt upon welding. The second layer acts like a matrix surrounded by the molten and solidified material. One must only see to it that the second layer is also thin and permeable enough for the material of the first and third layers that melts upon welding so that the first and third layers that melts upon welding so that the first and third layers become interconnected.

The following is a detailed description of embodiments of the dust bag of the present invention made with reference to the drawings, in which
Fig. 1 is a side elevational view of a vacuum cleaner with a dust bag arranged therein,
Fig. 2 is a top plan view of the dust bag of Fig. 1,
Fig. 3 is a perspective view for a better understanding of the manner of producing a paper dust bag with a protective material web therein, and
Fig. 4 is a perspective view of the paper dust bag of Fig. 3 with the ends still open.

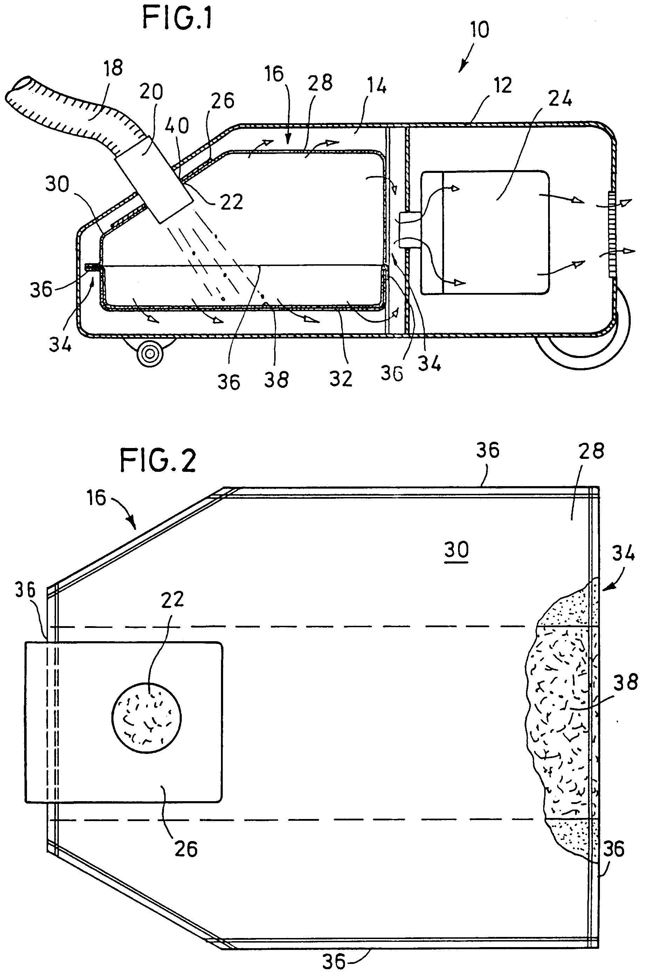

Referring now to Fig. 1, a vacuum cleaner 10 is represented schematically in side elevational view. A chamber 14 is formed in the housing 12 of the vacuum cleaner 10, the chamber 14 accommodating a vacuum cleaner bag 16. Air is sucked into the dust bag 16 through a hose 18 having a socket 20 adapted for connection to the vacuum cleaner housing 10. The socket 20 extends through an inlet opening 22 formed in the dust bag 16. In order to generate a partial vacuum inside the dust bag 16, the vacuum cleaner 10 is provided with a fan indicated at 24. A holding plate 26 of rigid, flexurally strong material serves to hold the dust bag 16, to which it is connected, at the vacuum cleaner housing 12 in the area of the inlet opening 22.

The dust bag 16 comprises a filter bag 28 of a two-layered fiber material composite. This fiber material composite comprises a first filter layer of polypropylene fibers acting as a filter layer, and a supporting layer connected with this filter layer and also consisting of polypropylene fibers. This supporting layer has a strength that gives the filter bag 28 a sufficient stability and strength during the operation of the vacuum cleaner 10 and the handling of the dust bag 16. The material used for the filter bag 28 is a filter fiber material, available from The Minnesota Mining and Manufacturing Company and specified as "SBMF". The supporting layer of the fiber material composite forms the outer layer of the filter bag 28.

The filter bag 28 has an upper wall portion 30 and a lower wall portion 32. The inlet opening 22 is formed in the upper wall portion 30. As indicated at 34 in Fig. 1, the opposing edges 36 of the two wall portions 30, 32 of the filter bag 28 are welded together (cf. also the plan view of the filter bag 28 in Fig. 2).

As illustrated in Figs. 1 and 2, the filter bag 29 contains a protective layer insert 38 that loosely lies on the inner surface of the lower wall portion 32. The protective layer insert 38 extends between at least two edges 36 of the two wall portions 30, 32 between which it is held. As can be seen in Fig. 2, the protective layer insert 38 is strip-shaped and extends in the surface area of the lower wall portion 32 that is opposite the inlet opening 22. The protective layer insert 38 is made from an air-permeable and resistant non-woven of synthetic fibers. The material used for the protective layer insert is a spunbonded nylon web sold under the trademark "CEREX" and available from Fiber Web Sweden AB, Sweden. The strength of the spunbonded web of the protective layer insert 38 is considerably greater than the strength of the fiber composite material of the filter bag 28. The protective layer insert 38 protects the interior of the filter bag 28 against damage by impinging particles carried in the air f low sucked into the dust bag 16, since it is arranged opposite the inlet opening 22. The remaining inner surface area of the filter bag 28 does not have to be protected from damage by particles in the air f low because the particles do not impinge with such a high velocity on the rest of the filter bag 28. Due to the high permeability to air of the protective layer insert 38 that is considerably higher than that of the fiber composite of the filter bag 28, the fluidic properties of the dust bag 16 are not impaired.

The dust bag 16 illustrated in Figs. 1 and 2 is produced as follows. The strip-shaped protective layer insert 38 is applied onto a first layer of fiber composite material that will form the lower wall portion 32 of the filter bag 28. The protective layer insert 38 is positioned such that the strip is arranged opposite to the inlet opening 22 to be formed later on. Subsequently, a further layer of fiber composite material that will form the upper wall portion 30, is applied onto the first layer and the protective layer insert 38. Prior to this step, the inlet opening 22 has been formed in this further layer. Then, the sequence of layers, comprising the two fiber composite layers and the interposed strip-shaped protective layer insert 38, is welded at the edges 36. The longitudinal dimension of the protective layer insert 38 is selected such that the protective layer insert 38 extends to between at least two of the interconnected welded edges 36 of the fiber composite layers of the two wall portions 30, 32. Thus, the protective layer insert 38 is held at the edges 36 of the filter bag 28. The melting temperature of the fibers of the protective layer insert 38 is higher than that of the fibers of the wall portions 30, 32. Thereby, it is achieved that the protective layer insert 38 contributes to the strengthening of the weld seam. The permeability and the thinness of the protective layer insert 38 ensures that the molten fiber material of the wall portions 30, 32 penetrates the protective layer insert 38 and becomes bonded. In a further step, the holding plate 26 is fastened to the filter bag 28 in the area of the inlet opening 22. The holding plate 26 has a hole 40 aligned with the inlet opening 22.

A sample of a dust bag of fiber composite material was produced for experimental purposes. The material used for the fiber composite was a two-layered non-woven laminate available from The Minnesota Mining and Manufacturing Company under the name "SBMF". This fiber laminate has a supporting layer consisting of a spunbonded polypropylene web with a weight of 30 g/m². The second layer, that is the filter layer, was constituted by a further fiber layer of polypropylene fibers with a weight of 40 g/m². This filter layer consists of polypropylene fibers that were blown onto the supporting layer in a molten state (so-called melt blown fibers). Details of the fiber laminate used for the filter bag 28 are given in US Patent 4,917,942. The protective layer insert 38 was a strip of spunbonded nylon web sold under the trademark "CEREX" and available from the Fiber Web Sweden AB, Sweden. The weight of the material used was 10 g/m². The material consisted of 100% of continuous filaments that were interconnected at each intersection. The tensile strength in the machining direction was 4.1 kg and 2.3 kg in the direction transversal thereto. The trap tear strength was 1.6 kg in the machining direction and 1.1 kg in the direction transversal thereto. The permeability to air was 6.6m³/sec/m². The thickness of the protective layer insert 38 was 0.08 m.

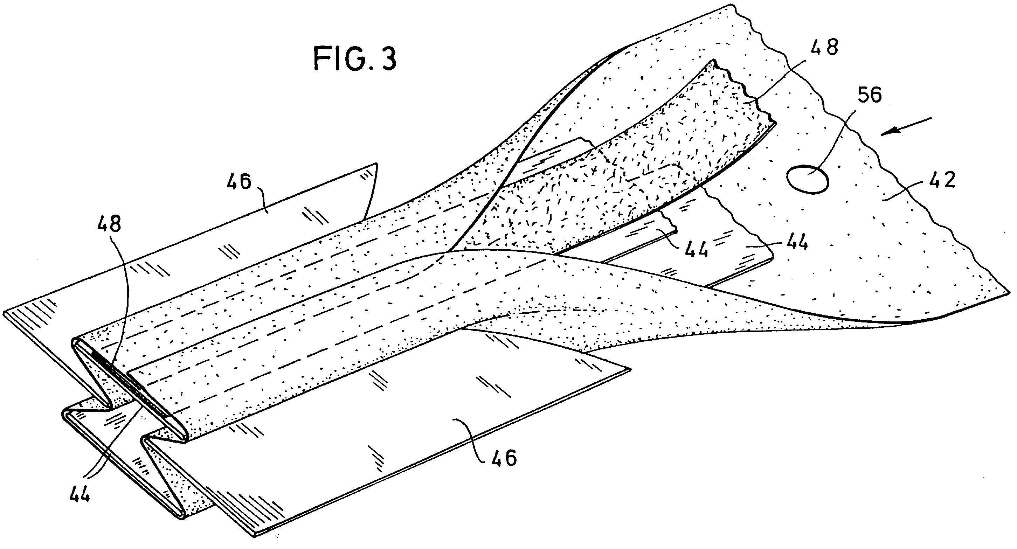

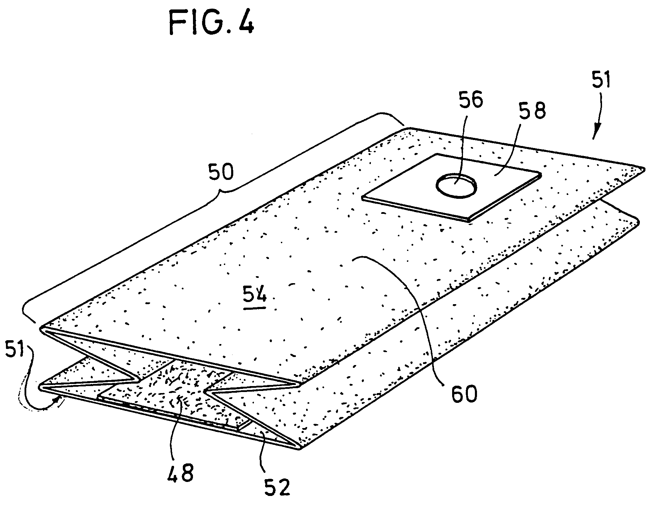

Figures 3 and 4 schematically illustrate a second method of production for making a filter bag for a dust bag and the dust bag with the ends not yet closed, respectively. According to Fig. 3, a filter paper web 42 is supplied below the lower of two or more guide plates 44. The filter paper web 42, extending for about the same length beyond the longitudinal sides of the guide plates 44, is folded at the protruding edges so that it encloses the guide plates 44. When the edges of the filter paper web 42 are fully folded, they overlap so that the edges of the filter paper web 42 may be bonded by applying adhesive. Further guide plates 46, one on each longitudinal side, extend into the space between the parallel spaced guide plates 44 or two respective adjacent guide plates. These two further guide plates 46, arranged in pairs, are disposed on the same height and act to provide the filter paper web 42 laid around the guide plates 44 with two lateral folds shown in Figs. 3 and 4, or with a plurality of lateral folds. Together with the filter paper web 42, a further web of protective material 48 is supplied. This further web 48, which is substantially narrower than the filter paper web 42, is also enclosed by the filter paper web 42. According to Fig. 3, this further web 48 can be advanced together with the filter paper web 42, the further web resting on the upper guide plate 44. It is the purpose of the protective material web 48 to protect the inner surface of the filter paper web 42 of a finished filter bag 28 against damages inflicted by particles in the air flow impinging thereon. Openings 56 that will form the inlet openings of the later filter bags are provided in the filter paper web 42 at predetermined locations. The openings 56 face the protective material web 48. A portion 50 of the filter paper web 42 formed according to Fig. 3, with the protective material web 48 enclosed therein, is severed for making a filter bag (see Fig. 4), the portion having an opening 56 therein. The filter paper web 42 thus formed has two opposite wall portions 52, 54. The wall portion 52 includes the two overlapping longitudinal edges of the filter paper web 42. The protective material web 48 lies on the inside of the wall portion 52. The opposite wall portion 54 has the inlet opening 56 provided before. A holding plate 58 is fastened to the formed filter paper web 42 so as to surround the opening 56. The protective material web 48 is positioned such that the protective material is arranged opposite the opening 56. By folding and glueing the open ends 51 of the portion 50, the same is closed at its two ends 51 so that the finished filter bag 60 is obtained. The protective material web 48 is held at the filter bag 60 at its two longitudinal ends 51. The method of production described herein could also be used with the filter material of the first method of production.

The above is a description of two embodiments of a dust bag with a protective layer for protecting the dust bag against damages by particles carried in the air flow and impinging thereon at a high velocity. The protective layer extends through the dust bag as a comparatively narrow strip in order to cover the surface area opposite the inlet opening of the dust bag. Integrating the protective layer strip into the production process of a dust bag is relatively simple and poses little problems. The material costs of a dust bag can be reduced since the protective layer is arranged only where needed. The permeability to air and the pressure drop of the dust bag are not compromised since the material of the protective layer is highly permeable to air when compared to the permeability to air of the remaining material of the filter bag.

## Claims

1. A dust bag comprising:
- a filter bag (28;60) having an air-permeable filter material, said filter bag having two wall portions (30, 32;52,54) that are connected at longitudinally opposing edges (36,51) so as to form said filter bag (28;60),
- an inlet opening (22;56) for allowing the air to be filtered to enter said filter bag (28;60), said inlet opening (22;56) being provided in one of said wall portions (30,32;52,54), and
- a protective layer (38;48) resistant to mechanical stresses caused by particles carried in the air flow and protecting said filter material, said protective layer (38;48) being arranged on the inner surface of the other of said wall portions (30,32;52,54) and extending at least over the surface area thereof opposite said inlet opening (22;56) between two interconnected edges (36,51) of said wall portions (30, 32;52,54) between which it is held, said edges (36,51) defining the longitudinal dimension of said filter bag (28,60),
**characterized in that**
- said protective layer (38,48) is of an air-permeable material and
- said protective layer (38;48) is in the form of a protective strip being narrower than the wall portions (30,32;52,54), the longitudinal ends of said protective strip being positioned and held only at the longitudinally opposing interconnected edges (36,51) of said wall portions (30, 32;52,54).

2. The dust bag of claim 1, characterized in that said protective layer (38;48) is a non-woven web of firmly interconnected thermoplastic polymer fibers that are welded together and have a low weight and a high strength.

3. The dust bag of claim 1, characterized in that said filter material is a filter paper material.

4. The dust bag of claim 1, characterized in that said filter material is a single or multiple-layer composite with synthetic fiber material.

5. The dust bag of claim 4, characterized in that said wall portions (30,32) are welded together at their edges (36) and that the melting temperature of the material of the protective layer (38) is higher than the melting temperature of the synthetic fiber filter material.

6. A method for producing a dust bag according to claim 1, wherein
- a first web (42) of air-permeable filter material is supplied,
- a second layer (48) of an air-permeable material, resistant to mechanical stresses caused by particles carried in the air flow and protecting said first web (42) filter material, is supplied together with said first web (42), said second web being narrower than said first web,
- said first web (42) is formed such that its two longitudinal edges overlap and the first web (42) thus formed encloses said second web (48),
- said overlapping longitudinal edges of said first web (42) are connected,
- an opening (56) is provided in said first web (42), said opening opposing said second web (48),
- a portion (50) of said formed first web (42) with said second web (48) positiond therein is cut off, and
- said cut off portion (50) is sealed at both ends (51), said second web (48) being held at both sealed ends (51) of said cut off portion (50).

7. The method of claim 6, wherein said first web (42) comprises a paper filter material.

8. The method for producing a dust bag according to claim 1, wherein
- a second layer (38) of an air-permeable material resistant to mechanical stresses caused by particles carried in the air flow to be filtered and protecting a first layer (32) of filter material is placed on said first layer (32) of air-permeable filter material containing synthetic thermoplastic fibers, said second layer (38) being narrower than said first layer (32),
- a third layer (30) of an air-permeable filter material containing synthetic thermoplastic fibers is placed on said second layer (38),
- this sequence of layers is welded together along a continous edge line, and
- prior to the superposing and bonding of said layers (32,38,30), an inlet opening (22) is provided said first or third layer (32,30) for allowing the air to be filtered to enter the filter bag (28) formed by said first and third layers (32,30), said opening being opposite said second layer (38).

9. The method of claim 8, characterized in that said second layer (38) is narrower than said first and third layers (32,30) and that said inlet opening (22) is arranged opposite said narrow second layer (38).

## Patentansprüche

1. Staubsaugerbeutel mit
- einem ein luftdurchlässiges Filtermaterial aufweisenden Filterbeutel (28;60), der zwei Wandbereiche (30,32;52,54) aufweist, welche an ihren gegenüberliegenden Rändern (36;51) zur Bildung des Filterbeutels (28;60) verbunden sind,
einer Einlaßöffnung (22;56) zum Einlaß von zu filternder Luft in den Filterbeutel (28;60), wobei die Einlaßöffnung (22;56) in einem der Wandbereiche (30,32;52,54) angeordnet ist, und
einer Schutzschicht (38;48) aus einem gegen mechanische Beanspruchungen durch von der Luft mitgeführte Partikel widerstandsfähigen, das Filtermaterial schützenden Material, wobei die Schutzschicht (38; 48) auf der Innenfläche des anderen Wandbereichs (30,32; 52,54) angeordnet ist und sich zumindest über dessen der Einlaßöffnung (22; 56) gegenüberliegenden Flächenbereich bis zwischen mindestens zwei der miteinander verbundenen Ränder (36;51) der Wandbereiche (30,32; 52,54) erstreckt, zwischen denen sie gehalten ist, wobei die Ränder (36, 51) die Längsabmessung des Filterbeutels (28, 60) definieren,
dadurch gekennzeichnet, daß
- die Schutzschicht (38, 48) aus einem luftdurchlässigen Material besteht, und
- die Schutzschicht (38;48) als Schutzstreifen ausgebildet ist, dessen in Längserstreckung liegende Enden zwischen den gegenüberliegenden miteinander verbundenen Rändern (36;51) der Wandbereiche (30,32; 52,54) angeordnet und zwischen diesen gehalten sind.

2. Staubsaugerbeutel nach Anspruch 1, dadurch gekennzeichnet, daß die Schutzschicht (38;48) ein Vlies aus fest miteinander verbundenen thermoplastischen, miteinander verschweißten polymeren Fasern mit einem geringen Gewicht sowie einer hohen Festigkeit ist.

3. Staubsaugerbeutel nach Anspruch 1, dadurch gekennzeichnet, daß das Filtermaterial ein Filterpapiermaterial ist.

4. Staubsaugerbeutel nach Anspruch 1, dadurch gekennzeichnet, daß das Filtermaterial ein ein- oder mehrlagiges synthetisches Komposit-Fasermaterial ist.

5. Staubsaugerbeutel nach Anspruch 4, dadurch gekennzeichnet, daß die Wandbereiche (30,32) an ihren Rändern (36) miteinander verschweißt sind und daß die Schmelztemperatur des Materials der Schutzschicht (36) höher ist als die Schmelztemperatur des synthetischen Faser-Filtermaterials.

6. Verfahren zum Herstellen eines Staubsaugerbeutels nach Anspruch 1, bei dem
eine erste Bahn (42) aus luftdurchlässigem Filtermaterial zugeführt wird,
zusammen mit der ersten Bahn (42) eine gegenüber dieser schmalere zweite Bahn (48) aus einem gegen mechanische Beanspruchungen durch von der Luft mitgeführte Partikel widerstandsfähigen, das Filtermaterial der ersten Bahn (42) schützenden, luftdurchlässigen Material zugeführt wird,
die erste Bahn (42) derart geformt wird, daß sich ihre beiden Längsränder überlappen und die derart geformte erste Bahn (42) die zweite Bahn (48) umgibt,
die sich überlappenden Längsränder der ersten Bahn (42) miteinander verbunden werden,
in die erste Bahn (42) eine der zweiten Bahn (48) gegenüberliegende Öffnung (56) eingebracht wird,
- ein Abschnitt (50) der geformten ersten Bahn (42) mit darin angeordneter zweiter Bahn (48) abgetrennt wird und
- der abgetrennte Abschnitt (50) an den beiden Enden (51) dicht verschlossen wird, wobei die zweite Bahn (48) an den beiden verschlossenen Enden (51) des abgetrennten Abschnitts (50) gehalten ist.

7. Verfahren nach Anspruch 6, dadurch gekennzeichnet, daß die erste Bahn (42) ein Filterpapiermaterial aufweist.

8. Verfahren zum Herstellen eines Staubsaugerbeutels nach Anspruch 1, bei dem
auf eine erste Schicht (32) aus einem synthetische, thermoplastische Fasern aufweisenden luftdurchlässigen Filtermaterial eine zweite Schicht (38) aus einem gegen mechanische Beanspruchungen durch von der zu filternden Luftströmung mitgeführte Partikel widerstandsfähigen, das Filtermaterial schützenden, luftdurchlässigen Material aufgebracht wird,
auf die zweite Schicht (38) eine dritte Schicht (30) aus einem synthetische, thermoplastische Fasern aufweisenden luftdurchlässigen Filtermaterial aufgebracht wird,
diese Schichtenfolge längs einer geschlossenen Linie miteinander verschweißt wird und
vor dem Übereinanderanordnen und Verschweißen der Schichten (32, 38,30) in der ersten oder dritten Schicht (32,30) eine Einlaßöffnung (22) zum Einlaß von zu filternder Luft in den von der ersten und der dritten Schicht (32,30) gebildeten Filterbeutel (28) ausgebildet wird, die der zweiten Schicht (38) gegenüberliegt.

9. Verfahren nach Anspruch 8, dadurch gekennzeichnet, daß die zweite Schicht (38) schmaler ist als die erste und die dritte Schicht (32,30) und daß die Einlaßöffnung (22) der schmalen zweiten Schicht (38) gegenüberliegend angeordnet wird. Die Erfindung betrifft einen Staubsaugerbeutel sowie ein Verfahren zum Herstellen eines Staubsaugerbeutels.

## Revendications

1. Sac à poussière comprenant :
- un sac de filtrage (28 ; 60) pourvu d'une matière de filtrage perméable à l'air, ledit sac de filtrage comportant deux parties de paroi (30, 32 ; 52, 54) qui sont reliées sur leurs bords longitudinalement opposés (36, 51) de façon à former ledit sac de filtrage (28 ; 60),
- une ouverture d'entrée (22 ; 56) pour permettre à l'air à filtrer de pénétrer dans ledit sac de filtrage (28 ; 60), ladite ouverture d'entrée (22 ; 56) étant formée dans une desdites parties de paroi (30, 32 ; 52, 54), et
- une couche protectrice (38, 48) résistant à des contraintes mécaniques engendrées par des particules entraînées par l'écoulement d'air et protégeant ladite matière de filtrage, ladite couche protectrice (38 ; 48) étant disposée sur la surface intérieure de l'autre desdites parties de paroi (30, 32 ; 52, 54) et s'étendant au moins sur sa zone superficielle qui est opposée à ladite ouverture d'entrée (22 ; 56) entre deux bords interconnectés (36, 51) desdites parties de paroi (30, 32 ; 52, 54) entre lesquelles elle est maintenue, lesdits bords (36, 51) définissant la dimension longitudinale dudit sac de filtrage (28, 60),
caractérisé en ce que :
- ladite couche protectrice (38, 48) est formée d'une matière perméable à l'air, et
- ladite couche protectrice (38,48) se présente sous la forme d'une bande protectrice plus étroite que les parties de paroi (30, 32 ; 52, 54), les extrémités longitudinales de ladite bande protectrice étant positionnées et maintenues seulement sur les bords interconnectés et longitudinalement opposés (36, 51) desdites parties de paroi (30, 32 ; 52, 54).

2. Sac à poussière selon la revendication 1, caractérisé en ce que ladite couche protectrice (38 ; 48) est une nappe non-tissée en fibres polymères thermoplastiques solidement interconnectées, qui sont soudées ensemble et ont un faible poids et une grande résistance.

3. Sac à poussière selon la revendication 1, caractérisé en ce que ladite matière de filtrage est formée de papier-filtre.

4. Sac à poussière selon la revendication 1, caractérisé en ce que ladite matière de filtrage est un produit composite à une ou plusieurs couches d'une matière fibreuse synthétique.

5. Sac à poussière selon la revendication 4, caractérisé en ce que lesdites parties de paroi (30, 32) sont soudées ensemble sur leurs bords (36) et en ce que la température de fusion de la matière de la couche protectrice (38) est plus élevée que la température de fusion de la matière de filtrage en fibres synthétiques.

6. Procédé de fabrication d'un sac à poussière selon la revendication 1, dans lequel :
- une première nappe (42) d'une matière de filtrage perméable à l'air est amenée,
- une seconde nappe (48) d'une matière perméable à l'air, résistant à des contraintes mécaniques causées par des particules entraînées dans l'écoulement d'air et protégeant ladite première nappe (42) de matière de filtrage, est amenée en même temps que ladite première nappe (42), ladite seconde nappe étant plus étroite que ladite première nappe,
- ladite première nappe (42) est mise en forme de telle sorte que ses deux bords longitudinaux se recouvrent et cette première nappe (42) ainsi mise en forme entoure ladite seconde nappe (48),
- ledits bords longitudinaux en recouvrement de ladite première nappe (42) sont reliés ensembles,
- une ouverture (56) est formée dans ladite première nappe (42), cette ouverture étant située à l'opposé de ladite seconde nappe (48),
- une partie (50) de ladite première nappe (42) mise en forme et dans laquelle est disposée ladite seconde nappe (48) est sectionnée, et
- ladite partie sectionnée (50) est scellée aux deux extrémités (51), ladite seconde nappe (48) étant maintenue aux deux extrémités scellées (51) de ladite partie sectionnée (50).

7. Procédé selon la revendication 6, dans lequel ladite première nappe (42) est formée de papier-filtre.

8. Procédé de fabrication d'un sac à poussière selon la revendication 1, dans lequel :
- une seconde couche (38) d'une matière perméable à l'air, résistant à des contraintes mécaniques causées par des particules entraînées dans l'écoulement d'air à filtrer et protégeant une première couche (32) d'une matière de filtrage est placée sur ladite première couche (32) de matière de filtrage perméable à l'air contenant des fibres thermosplastiques synthétiques, ladite seconde couche (38) étant plus étroite que ladite première couche (32),
- une troisième couche (30), formée d'une matière de filtrage perméable à l'air et contenant des fibres thermoplastiques synthétiques est mise en place sur ladite seconde couche (38),
- cet ensemble de couches est soudé le long d'une ligne de bordure continue, et
- avant la superposition et la liaison desdites couches (32 , 38, 30), une ouverture d'entrée (22) est formée dans ladite première couche ou ladite troisième couche (32, 30) de façon à permettre à l'air à filtrer de pénétrer dans le sac de filtrage (28) formé par lesdites première et troisième couches (32, 30), ladite ouverture étant située à l'opposé de ladite seconde couche (38).

9. Procédé selon la revendication 8, caractérisé en ce que ladite seconde couche (38) est plus étroite que lesdites première et troisième couches (32, 30) et en ce que ladite ouverture d'entrée (22) est située à l'opposé de ladite seconde couche étroite (38).
